# EUROPEAN PATENT APPLICATION

(11) **EP 0 688 082 A1**
(43) Date of publication of application: **20.12.1995**
(21) Application number: 95109103.2
(22) Date of filing: 13.06.1995
(51) Int. Cl.: H02J 7/00, H02J 7/34, H02J 9/06, H04M 19/08, H04Q 7/32

(54) **Portable communication apparatus preventing trouble when battery wears**

(30) Priority: 17.06.1994 JP 135848/94
(71) Applicant: KABUSHIKI KAISHA MIMASU KINZOKU SEISAKUSHO, Osaka-shi, Osaka (JP)
(72) Inventor: Tanaka, Toshihiro, c/o K.K. Mimasu Kinzoku Seisaku, Osaka-shi, Osaka (JP)
(74) Representative: Prüfer, Lutz H., Dipl.-Phys.

(57) **Abstract**

A portable telephone (1) includes in its body (2), a sub battery (4) contained therein or attached thereto, and a main battery (3a, 3b) is detachably provided on the body (2). Usually, main battery (3a, 3b) is attached to the portable telephone body (2), and power is supplied from the main battery (3a, 3b) to the equipments on the body (2) while the sub battery (4) is charged by the main battery (3a, 3b). When the main battery (3a, 3b) is to be exchanged, power is supplied from the sub battery (4) to the equipments (2) on the body. Therefore, possible trouble encountered at the time of battery exchange in the portable communication equipment can be prevented.

## Description

### BACKGROUND OF THE INVENTION

### Field of the Invention

The present invention relates to a portable communication equipment such as a portable telephone and, more specifically, to a portable communication apparatus free of trouble when method of power supply is switched or when battery wears.

### Description of the Related Art

A very small portable telephone or a facsimile allowing users to use telephone anywhere at any time has come to be commercially available. Such very small portable communication equipments come to be more widely used thanks to the convenience. However, there has been no measure proposed against disconnection of channels because of trouble in power supply, when the method of power supply is switched or when the amount of charges stored in a battery is small.

Though it is convenient, such a portable communication equipment generally employs a chargeable battery so as to allow the user to carry the equipment anywhere. Therefore, it suffers from the trouble of disconnection in the following situations.
(1) The channel is disconnected when a battery, of which amount of charges is reduced, is being exchanged for another charged battery.
(2) The channel is disconnected while the method of power supply is being switched, for example:
   (i) when power supply is switched from a power source adaptor for cigar lighter of an automobile to a battery;
   (ii) when power source is switched from a battery to a power source adaptor for a cigar lighter of an automobile; and
   (iii) when the power source is switched from currently used one to another.
(3) When the amount of charges in the battery is barely over the alarm level requiring re-charging, the channel may be disconnected only after ringing tone, or the channel may be disconnected before the caller is identified when a call is received, due to insufficient power.

A nickel-cadmium battery is frequently used as such a battery for portable equipments. The nickel-cadmium battery has such property that when it is re-charged before it is fully discharged, the chargeability thereof is degraded. Therefore, when the battery is exchanged earlier in order to avoid the problem of disconnection such as mentioned above, chargeability of the battery is degraded.

### SUMMARY OF THE INVENTION

Therefore, an object of the present invention is to prevent such a trouble experienced when the amount of charges stored in the battery is small or when the method of power supply is switched in a portable communication equipment such as a portable telephone.

Another object of the present invention is to provide a portable communication equipment allowing the user to communicate free of care of the remaining amount of charges in the battery.

A still further object of the present invention is to ensure superior chargeability of a nickel-cadmium battery used for portable communication equipment.

The above described objects of the present invention can be attained by the portable communication equipment of the present invention including: a communication unit having at least a function of transmission or reception; a chargeable sub battery provided on the communication unit; a power source detachably provided on the communication unit for supplying power to the communication unit and for charging the sub battery; and a supplier for supplying power from the battery to the communication unit, when the power source is detached from the communication unit.

In the portable communication equipment in accordance with the present invention, the communication unit is usually fed by the detachable power source, and when the power source is detached, power is fed from the battery.

Generally, the sub battery which is attached to or contained in the equipment is charged by a power source such as a main battery. When the power source is switched, for example when the main battery is consumed, power is supplied from the sub battery to the communication unit.

As a result, a portable communication unit free from such a trouble incidental to switching or wear of a battery can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram of a portable telephone as an example of the portable communication unit in accordance with the present invention.

Figs. 2A to 2C show connection between each of a main battery, a sub battery and body of a portable telephone.

### DESCRIPTION OF THE PREFERRED EMBODIMENTS

An embodiment of the present invention will be described with reference to the figures.

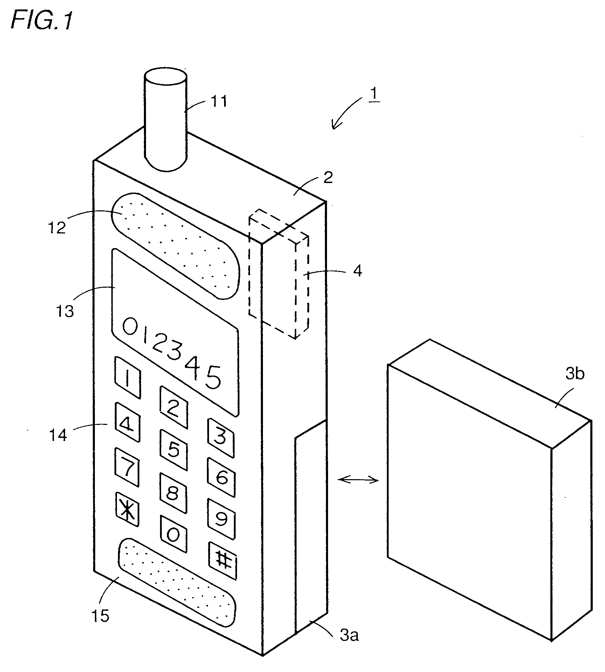

Fig. 1 is a schematic perspective view of a portable telephone as an example of the portable communication equipment in accordance with the present invention. Referring to Fig. 1, a portable telephone 1 includes a portable telephone body 2, and a main battery 3a detachably provided on body 2. The body 2 includes an antenna 11 for transmission/reception provided at its upper portion, a speaker 12 provided at a front surface of the body, a display 13 for displaying information provided below the speaker 12, keys 14 for dialing or the like provided below the display 13, and a microphone 15.

A user inputs desired telephone number through keys 14, and communicates with the called by means of microphone 15 and speaker 12. At this time, information such as the telephone number of the partner is displayed on display 13.

On the back of body 2, a main battery 3a for supplying power to body 2 is detachably provided. The main battery 3a is rechargeable and the user always brings with him or with her a spare main battery 3b which is charged. When the main battery 3a attached to the body 2 wears, it can be switched to the spare main battery 3b. In the portable telephone in accordance with the present invention, a sub battery 4 which can be charged by the main battery 3a is attached (or contained).

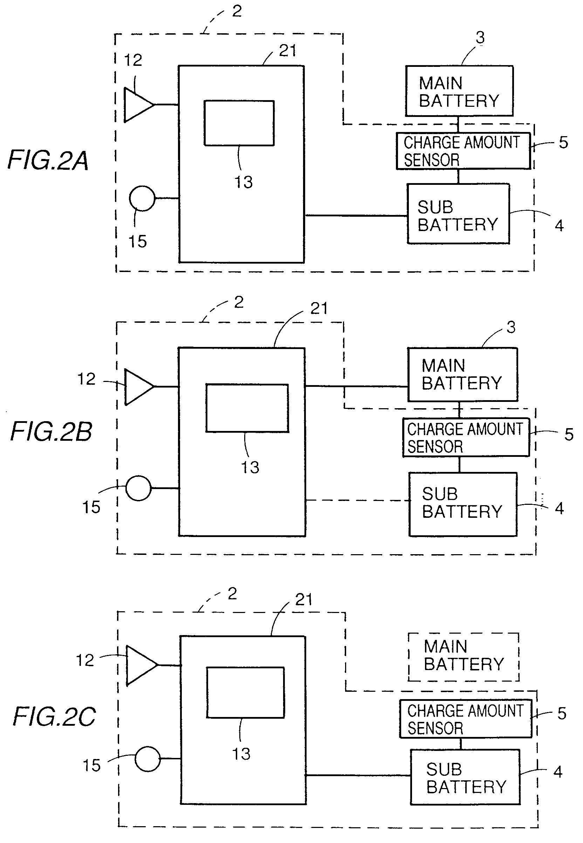

Figs. 2A to 2C show connections between each of the body equipments 21 provided on body 2, main battery 3 and sub battery 4. Fig. 2A shows an example in which power from the main battery 3 is constantly supplied to sub battery 4, and power to the body 2 is always supplied through sub battery 4. Fig. 2B shows an example in which power is supplied parallel from main battery 3 to body equipments 21 and to sub battery 4. Either of these methods may be employed in the portable telephone in accordance with the present invention. In the example of Fig. 2A, when the amount of charges stored in main battery 3 reduces, a battery wear sensor 5 senses that the amount of charges in the main battery 3 is reduced, power supply from the main battery 3 to the sub battery 4 is stopped as shown in Fig. 2C, and power is supplied only from the sub battery 4 to the body equipments 21. In the example of Fig. 2B, when the amount of charges stored in main battery 3 reduces, the battery wear sensor 5 senses that the amount of charges in main battery 3 is reduced, power supply from main battery 3 to the body equipments is stopped as shown in Fig. 2C, and the power is supplied only from sub battery 4 to the body equipments 21.

In either case, when the battery wear sensor 5 of main battery 3a operates, user detaches the main battery 3a from the body 2 in response to a voice alarm from the speaker 12, for example, and attaches another main battery 3b to the body 2. Sub battery 4 should have at least the storage capacity sufficient to keep the communication channel connected while the main battery 3a is replaced by main battery 3b.

In any case, power is supplied from sub battery 4 to body equipments 21 while main battery 3 is exchanged. Therefore, any such trouble as mentioned above, that is, communication is stopped before confirmation of the caller or after only the ringing tone because of disconnection, can be prevented. Further, even when the amount of charges stored is small, the user can use the channel free of care, and the main battery 3 is fully discharged. When a nickel-cadmium battery is used as the main battery 3, superior chargeability of the battery is ensured, since the battery can be used until the charges are fully discharged.

Though only a chargeable main battery 3 is used as a usual power source in the above described embodiment, the present invention may also be applied when a main power source other than the chargeable battery, such as a common non-chargeable battery, is used as the usual power source. Further, the present invention is also applicable to feed power to the body equipment when the power source is changed from the main battery 3 to other power source or from other power source to the main battery 3.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A portable communication equipment (1), comprising:
communication means (2) having at least a function of transmission or reception (11);
a chargeable battery (4) provided on said communication means;
power source means (3a, 3b) detachably provided on said communication means (2) for supplying power to said communication means (2) and for charging said battery (4); and
means for supplying power from said battery (4) to said communication means (2), when said power source means (3a, 3b) is detached from said communication means (2).

2. A portable communication equipment (1) according to claim 1, further comprising:
means (5) for detecting amount of charges stored in said power supply means (3a, 3b); wherein
power is supplied from said battery (4) to said communication means (2) when said amount of charge detecting means (5) detects said amount of charges smaller than a prescribed value.

3. The portable communication equipment (1) according to claim 1 or 2, wherein
said power source means (3a, 3b) supplies power to said communication means (2) through said battery (4).

4. The portable communication equipment according to one of claims 1 to 3, wherein
said battery (4) has at least storage capacity enough to keep communication channel connected for at least a time period in which said power supply means (3a, 3b) is exchanged.

5. The portable communication equipment (1) according to one of claims 2 to 4, further comprising
means for giving an alarm when said charge amount detecting means (5) detects said prescribed value.

6. The portable communication equipment (1) according to one of claims 1 to 5, wherein
said communication equipment (1) is a telephone.
